# EUROPÄISCHE PATENTSCHRIFT

(11) **EP 3 309 907 B1**
(45) Veröffentlichungstag und Bekanntmachung des Hinweises auf die Patenterteilung: **12.12.2018**
(21) Anmeldenummer: 16194144.8
(22) Anmeldetag: 17.10.2016
(51) Int. Cl.: H01R 13/66, H01R 13/533, F16D 66/00

(54) **KABEL**
CABLE
CÂBLE

(43) Veröffentlichungstag der Anmeldung: 18.04.2018
(73) Patentinhaber: MD Elektronik GmbH, 84478 Waldkraiburg (DE)
(72) Erfinder: HAAS, Alexander, 84453 Mühldorf (DE); MIRZ, Sebastian, 84559 Kraiburg (DE); OHNI, Josef, 84559 Kraiburg (DE); PREIS, Roland, 84544 Aschau (DE); GELTINGER, Simon, 84166 Adlkofen (DE)
(74) Vertreter: Hofmann, Ernst

(56) Entgegenhaltungen:
- DE-A1- 4 423 677
- US-A1- 2010 019 733

## Beschreibung

Die Erfindung betrifft ein konfektioniertes Kabel, welches insbesondere einen Steckverbinder beziehungsweise ein Kupplungselement umfasst, gemäß dem Anspruch 1.

### GEBIET DER TECHNIK

Die betreffenden Kabel sind etwa in Kraftfahrzeugen einsetzbar, beispielsweise in Bremssystemen von Kraftfahrzeugen und werden meist in großen Stückzahlen benötigt. Zur kostengünstigen Bereitstellung entsprechender Kabel sind ein einfacher Aufbau und eine einfache Konfektionierbarkeit von großer Bedeutung. Derartige Kabel müssen prozesssicher mit hohen Anforderungen im Hinblick auf ihre Robustheit, insbesondere bezüglich Dichtigkeit gegenüber Wasser oder anderen Flüssigkeiten hergestellt werden.

### STAND DER TECHNIK

Aus der Offenlegungsschrift DE 44 23 677 A1 ist ein mehrpoliger Stecker bekannt, welcher für den Einbau in ein Bremssystem an Kraftfahrzeugen geeignet ist. In jenem Dokument wird unter anderem dargelegt, dass es vorteilhaft ist den betreffenden Stecker durch einen Spritzvorgang herzustellen, um ein flüssigkeitsdichtes Gehäuse zu schaffen. Auf diese Weise soll die Tauglichkeit des Steckers in der rauen Umgebung eines Bremssystems gewährleistet werden.

### ZUSAMMENFASSUNG DER ERFINDUNG

Der Erfindung liegt die Aufgabe zugrunde, ein optimiertes Kabel zu schaffen, welches insbesondere für einen Einsatz in rauen Umgebungen, etwa im Zusammenhang mit Bremssystemen geeignet ist.

Diese Aufgabe wird erfindungsgemäß durch die Merkmale des Anspruches 1 gelöst.

Erfindungsgemäß umfasst das Kabel eine Leitung, die zumindest eine Ader und häufig einen Mantel aufweist. Weiterhin umfasst das Kabel einen Steckverbinder, der zumindest einen Kontakt und ein flüssigkeitsdichtes dielektrisches Gehäuse aufweist. Der zumindest eine Kontakt, welcher im Sinne einer elektrischen Kupplung mit einem Gegenstück bestimmungsgemäß kontaktierbar ist, ist mit der zumindest einen Ader elektrisch verbunden, so dass ein elektrischer Strom von der zumindest einen Ader in den Kontakt leitbar ist. Ferner ist im Gehäuse ein temperaturempfindlicher Messwiderstand angeordnet, der derart elektrisch mit der zumindest einen Ader verbunden ist, dass zumindest ein Teil des elektrischen Stromes, der durch den zumindest einen Kontakt leitbar ist, durch den Messwiderstand fließt. Am Gehäuse ist zudem ein metallisches Element angeordnet, welches thermisch mit dem Messwiderstand verbunden ist.

Der Kontakt ist ein elektrisch leitendes Endstück der Ader beziehungsweise ein Endstück des Leiters und kann als Pin oder als Buchse ausgeführt sein.

In vorteilhafter Bauweise ist das Kabel so ausgestaltet, dass das Gehäuse eine Auskragung umfasst, an dem das metallische Element angeordnet ist und innerhalb der Auskragung der Messwiderstand angeordnet ist.

In weiterer Ausgestaltung der Erfindung durchdringt das metallische Element das Gehäuse, so dass insbesondere eine Teiloberfläche des metallischen Elements in das Gehäuseinnere weist und sich eine andere Teiloberfläche des metallischen Elements außerhalb des Gehäuses befindet. Insbesondere durchdringt das metallische Element die Auskragung des Gehäuses.

Mit Vorteil ist das metallische Element derart ausgestaltet, dass dieses zur Befestigung des Steckers an einem weiteren Bauteil geeignet ist. In vorteilhafter Bauweise ist das metallische Element als Hülse oder Öse ausgestaltet und weist insbesondere eine durchgehende Ausnehmung beziehungsweise Bohrung auf, die vom Material des Elements umgeben ist. Beispielsweise kann das Element eine hohlzylindrische Geometrie aufweisen oder die Form eines Segments einer hohlzylindrischen Geometrie. Das metallische Element ist also insbesondere vom Gehäuse in einer Weise umgeben, dass die durchgehende Ausnehmung beziehungsweise Bohrung von beiden Seiten der Ausnehmung beziehungsweise Bohrung her zugänglich ist.

Mit Vorteil ist das metallische Element thermisch mit dem der Messwiderstand über ein Blechteil verbunden. Insbesondere kann das Blechteil zwischen dem metallische Element und dem Messwiderstand im Gehäuse angeordnet und elastisch vorgespannt sein. Alternativ oder ergänzend zum Blechteil kann eine thermische Verbindung durch eine Wärmeleitpaste oder einen wärmeleitfähigen Kleber erreicht werden. Die thermische Verbindung kann auf einfache Weise auch durch einen unmittelbaren Berührkontakt zwischen dem Messwiderstand und dem metallischen Element hergestellt werden.

In weiterer Ausgestaltung der Erfindung ist der Messwiderstand derart elektrisch mit der zumindest einen Ader verbunden, dass der elektrische Strom, der durch den zumindest einen Kontakt leitbar ist, vollständig durch den Messwiderstand fließt. Mit anderen Worten ist bei dieser Anordnung der Messwiderstand in Reihe bezüglich des Leiters und des Kontakts geschaltet, insbesondere ist der Messwiderstand zwischen dem Leiter und dem Kontakt geschaltet. Mit Vorteil ist die zumindest eine Ader getrennt beziehungsweise auseinandergeschnitten oder unterbrochen, so dass die zumindest eine Ader zwei Enden aufweist. Dabei ist dann der Messwiderstand an jeweils einem Ende der zumindest einen Ader elektrisch kontaktiert. Folglich überbrückt dann der Messwiderstand die Trennstelle der zumindest einen Ader. Insbesondere kann bei dieser Anordnung ein Stück des Leiters entfernt sein, wobei das entfernte Stück durch den Messwiderstand überbrückt wird.

Mit Vorteil ist das Gehäuse durch ein Umspritzverfahren hergestellt, so dass der Messwiderstand umspritzt ist. Weiterhin ist bei dieser Bauweise die Ader zumindest teilweise von der Umspritzung umgeben. Der Begriff teilweise bezieht sich insbesondere auf die Länge der Ader, so dass also die Ader zumindest über einen Längenabschnitt hinweg vollständig von der Umspritzung umgeben ist.

In vorteilhafter Bauweise weist das Kabel einen Kontaktträger auf, an dem der zumindest eine Kontakt befestigt ist und welcher vom Gehäuse umgeben ist. Wenn das Gehäuse durch ein Umspritzverfahren hergestellt ist, kann insbesondere auch der Kontaktträger umspritzt sein. Alternativ oder ergänzend kann das metallische Element umspritzt sein. Alternativ oder ergänzend kann weiterhin die Leitung einen isolierenden Mantel aufweisen, welcher am Ende der Leitung entfernt ist, wobei der Mantel über einen Teillänge hinweg umspritzt sein kann. Insbesondere können die Adern über eine Länge, entlang welcher der Mantel entfernt ist, also im abgemantelten Bereich der Leitung, von der Umspritzung (insbesondere vollständig) umgeben sein.

In weiterer Ausgestaltung der Erfindung ist der Kontakt mit der Ader durch eine Crimpung verbunden.

Vorteilhafte Ausbildungen der Erfindung entnimmt man den abhängigen Ansprüchen.

Weitere Einzelheiten und Vorteile des erfindungsgemäßen Kabels beziehungsweise des erfindungsgemäßen Herstellungsverfahrens ergeben sich aus der nachfolgenden Beschreibung eines Ausführungsbeispiels anhand der beiliegenden Figuren.

### KURZE BESCHREIBUNG DER ZEICHNUNGEN

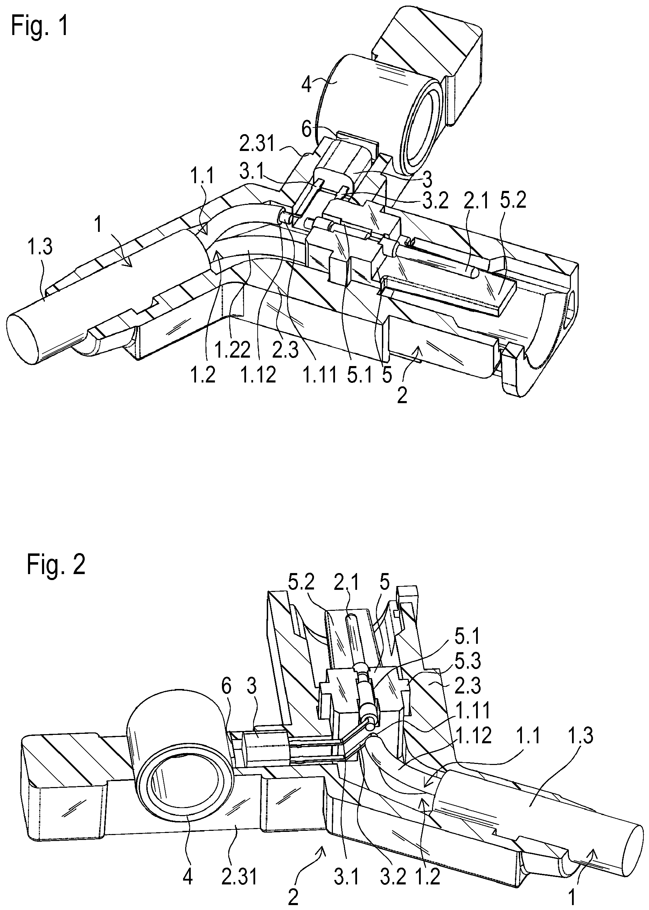

Es zeigen die
- Figur 1: eine erste perspektivische Schnittdarstellung eines Kabels,
- Figur 2: eine zweite perspektivische Schnittdarstellung des Kabels,

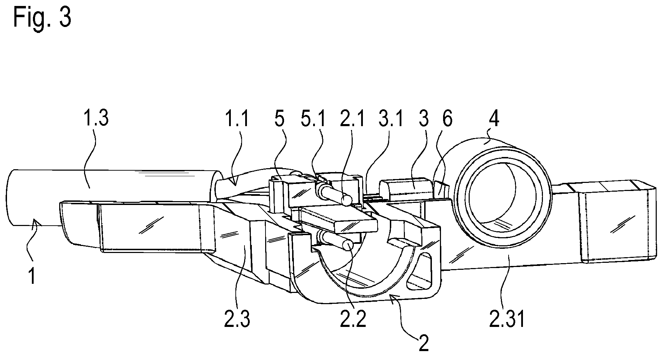

- Figur 3: eine dritte perspektivische Schnittdarstellung des Kabels.

### BESCHREIBUNG DER AUSFÜHRUNGSFORMEN

In den Figuren ist ein Kabel zur Übertragung eines Signals beispielsweise zur Überwachung eines Bremsverschleißes gezeigt, das insbesondere zum Einbau in einem Fahrzeug bestimmt ist. Derartige Kabel sind besonders rauen Umgebungsbedingungen ausgesetzt, weil sie außerhalb der Karosserie in der Nähe der Fahrzeugachsen verbaut werden.

Das Kabel umfasst eine Leitung 1, die in den Figuren nur teilweise dargestellt ist, und einen Steckverbinder 2 beziehungsweise ein Kupplungselement. Das Kabel kann durch den Steckverbinder 2 an einem Ende lösbar mit einem entsprechenden Gegenstück einer anderen Komponente etwa einer Buchse an beispielsweise einem Bremssattel im Sinne einer Steckverbindung verbunden werden. Am anderen Ende des Kabels, welches in den Figuren nicht dargestellt ist, kann ebenfalls ein Kupplungselement vorgesehen sein. Die Leitung 1 weist im vorgestellten Ausführungsbeispiel eine erste und eine zweite Ader 1.1, 1.2 auf. Die Adern 1.1, 1.2 umfassen jeweils einen Leiter 1.11, (der Leiter der zweiten Ader 1.2 ist in den Figuren nicht sichtbar), welche von einer Isolierschicht 1.12, 1.22 umgeben sind. Zum Beispiel können die Leiter 1.11 jeweils mehrere Einzeldrähte umfassen. Demgemäß können im vorgestellten Ausführungsbeispiel die Adern 1.1, 1.2 auch als Litzen bezeichnet werden. Weiterhin umfasst die Leitung 1 einen isolierenden Mantel 1.3, welcher die Adern 1.1, 1.2 umschließt.

Im Zuge der Herstellung des Kabels wird zunächst der Mantel 1.3 am Ende der Leitung 1 entlang einer Umfangsline eingeschnitten und danach abgezogen beziehungsweise entfernt. Danach werden die Adern 1.1, 1.2 an deren Enden von den Isolierschichten 1.12, 1.22 befreit, so dass die Leiter 1.11 freiliegen.

An die so vorbereitete Leitung 1 werden nun Kontakte 2.1, 2.2 befestigt. Insbesondere wird an den abisolierten beziehungsweise freigelegten Enden der Adern 1.1, 1.2 beziehungsweise an die Leiter 1.11 jeweils ein Kontakt 2.1, 2.2 fixiert, hier durch einen Crimpprozess oder aber auch durch einen Löt-oder Schweißprozess.

Weiterhin umfasst das Kabel im vorgestellten Ausführungsbeispiel einen Kontaktträger 5, welcher aus einem dielektrischen beziehungsweise elektrisch isolierenden Material hergestellt ist und hier als Spritzgussteil ausgestaltet ist. Der Kontaktträger 5 umfasst zwei Durchführungen 5.1. Die Durchführungen 5.1 sind parallel zueinander orientiert. Damit die später aufzubringende Umspritzung den Kontaktträger 5 fest umschließen kann, sind am Kontaktträger 5 Rippen 5.3 angeformt. Weiterhin umfasst der Kontaktträger 5 ein so genanntes Trennmesser 5.2.

Im weiteren Fortgang des Herstellungsprozesses des Kabels werden die Kontakte 2.1, 2.2 in den Kontaktträger 5 beziehungsweise in dessen Durchführungen 5.1 eingesetzt, so dass die Kontakte 2.1, 2.2 parallel im Kontaktträger 5 angeordnet sind. Die Durchführungen 5.1 sind derart ausgestaltet, dass diese ein Einbringen der Kontakte 2.1, 2.2 aus radialer Richtung (bezogen auf die Längsachse der Kontakte 2.1, 2.2) ermöglichen und ein gewisses Untermaß im Verhältnis zum Außendurchmesser der Kontakte 2.1, 2.2 aufweisen, so dass die Kontakte 2.1, 2.2 nach dem Einsetzen in den Kontaktträger 5 im Kontaktträger 5 fixiert sind.

Darauffolgend wird die erste Ader 1.1 im abgemantelten Bereich nahe des Kontaktträgers 5 getrennt, so dass diese dort zwei Enden aufweist. Insbesondere wird aus der ersten Ader 1.1 im abgemantelten Bereich nahe des Kontaktträgers 5 ein kurzes Stück des Leiters 1.11 samt Isolierschicht 1.12 herausgeschnitten. Danach werden die getrennten Enden der ersten Ader 1.1 über jeweils kurze Bereiche von der Isolierschicht 1.12 befreit, so dass der Leiter 1.11 am jeweiligen Ende freigelegt ist.

Im Anschluss daran wird ein temperaturempfindlicher Messwiderstand 3, im vorgestellten Ausführungsbeispiel ein Pt-100-Element, mit der ersten Ader 1.1 verbunden. Zu diesem Zweck wird ein Anschlusselement 3.1 des Messwiderstands 3 mit einem Ende des Leiters 1.11 der ersten Ader 1.1 elektrisch kontaktiert und ein weiteres Anschlusselement 3.2 des Messwiderstands 3 mit dem kontaktseitigem Ende des Leiters 1.11 der ersten Ader 1.1. Im vorgestellten Ausführungsbeispiel wird zur Kontaktierung ein Lötprozess angewendet. Der Messwiderstand 3 ist also in diesem Ausführungsbeispiel elektrisch gesehen gemäß einer Reihenschaltung bezüglich des Leiters 1.11 und des Kontakts 2.1 angeordnet. Folglich fließt im Betrieb des Kabels zwangsweise der gesamte Strom, der durch die Ader 1.1 beziehungsweise dessen Leiter 1.11 geleitet wird, auch durch den Messwiderstand 3.

Der Kontaktträger 5 mit der daran fixierten Leitung 1 samt Messwiderstand 3 wird in eine Umspritzmaschine eingelegt. Zudem werden auch ein metallisches Element 4, welche im vorgestellten Ausführungsbeispiel als hohlzylindrische Buchse ausgestaltet ist, und ein Blechteil 6 positionsgenau in die Umspritzmaschine eingelegt. Dies wird so vorgenommen, dass das Blechteil 6 unter elastischen Verformung mechanisch vorgespannt sowohl am Messwiderstand 3 als auch am metallischen Element 4 anliegt.

Darauffolgend werden die Leitung 1, der Kontaktträger 5, der Messwiderstand 3, das Blechteil 6 und das metallische Element 4 mit dielektrischem Material (z. B. mit thermoplastischem Kunststoff, mit duromerem Kunststoff oder mit einem Elastomer) umspritzt, so dass zumindest der Messwiderstand 3 und die daran kontaktierten Enden der ersten Ader 1.1 von der Umspritzung, die ein flüssigkeitsdichtes Gehäuse 2.3 bildet, umgeben sind.

Das metallische Element 4 ist teilweise vom flüssigkeitsdichten Gehäuse 2.3 umgeben. Dabei weist das Gehäuse 2.3 eine Auskragung 2.31 auf, an dem das metallische Element 4 angeordnet ist. Innerhalb der Auskragung 2.31 ist der Messwiderstand 3 angeordnet.

Das metallische Element 4, welches hier als Buchse beziehungsweise Öse ausgestaltet ist, dient zur Aufnahme einer Schraube, die in ein Gewinde eines Bremssattels eines Kraftfahrzeugs gedreht werden kann, so dass das Kabel und insbesondere der Steckverbinder 2 an diesem sicher fixierbar ist. Folglich dient das metallische Element 4 als Befestigungselement.

Durch die Verbindung des metallischen Elements 4 mit dem Bremssattel nimmt dieses in erster Näherung die Temperatur des Bremssattels an, welche durch den hermetisch dicht verbauten Messwiderstand 3 erfasst werden kann. Durch die spezielle Bauweise des Kabels kann vergleichsweise einfach eine hermetisch dichte Ausführung des Kabels an seinem Ende beziehungsweise im Bereich des Steckverbinders 2 erreicht werden. Andererseits kann trotzdem eine aussagefähige Größe für eine maßgebliche Temperatur außerhalb des Steckverbinders 2 erfasst werden.

Im Betrieb des Kraftfahrzeugs ist die erste Ader 1.1 mit einer elektrischen Baueinheit des Kraftfahrzeugs verbunden. Die zweite Ader 1.2 kann beispielsweise mit dem Massepotenzial des Kraftfahrzeugs in Kontakt gebracht sein. Die elektrische Baueinheit kann so ausgestaltet sein, dass diese einen konstanten Ausgangsstrom liefert, der durch das Kabel fließt. Im Bremssattel beziehungsweise im Bremsbelag ist häufig eine Leiterschleife vorgesehen. Bei fortschreitendem Verschleiß des Bremsbelags wird zunächst die Leiterschleife verletzt, was entsprechend detektiert werden kann und zu einer Warnung bezüglich des Bremsbelag-Verschleißes führt. Im weiteren Betrieb des Bremssystems führt ein fortschreitender Verschleiß zur vollständigen Unterbrechung der Leiterschleife und damit des Messstroms. Dies hat zur Folge, dass ein entsprechender Alarm ausgelöst wird.

Daneben kann durch den Messwiderstand 3 die Temperatur des Bremssattels bestimmt werden, wobei sich das Signal aus der Temperaturmessung von den Veränderungen in der Leiterschleife unterscheiden lässt. Bedingt durch die Bauweise des Kabels fließt im normalen Betrieb der gesamte Strom durch die erste Ader 1.1, den Messwiderstand 3 und den Kontakt 2.1. Eine weitere Messleitung ist nicht erforderlich. Vielmehr wird der ohnehin für die Leiterschleifenmessung erforderliche Leiter 1.1 auch für die Temperaturmessung genutzt.

Bei einem erforderlichen Austausch der Bremsbeläge muss der Steckverbinder vom Bremssattel gelöst werden und danach wieder mit der Leiterschleife des neuen Bremsbelags verbunden werden. Durch den Einbau des Messwiderstands in das Kabel ist ein Wechsel eines Temperatursensors in dieser Anordnung nicht nötig.

## Patentansprüche

1. Kabel umfassend
eine Leitung (1), die zumindest eine Ader (1.1) aufweist und
einen Steckverbinder (2), der zumindest einen Kontakt (2.1) und ein flüssigkeitsdichtes dielektrisches Gehäuse (2.3) aufweist, wobei
der zumindest eine Kontakt (2.1) mit der zumindest einen Ader (1.1) elektrisch verbunden ist, so dass ein elektrischer Strom von der zumindest einen Ader (1.1) in den Kontakt (2.1) leitbar ist, **dadurch gekennzeichnet, dass**
im Gehäuse (2.3) ein temperaturempfindlicher Messwiderstand (3) angeordnet ist, der derart elektrisch mit der zumindest einen Ader (1.1) verbunden ist, dass zumindest ein Teil des elektrischen Stromes, der durch den zumindest einen Kontakt (2.1) leitbar ist, durch den Messwiderstand (3) fließt, und
am Gehäuse (2.3) ein metallisches Element (4) angeordnet ist, welches thermisch mit dem Messwiderstand (3) verbunden ist.

2. Kabel gemäß dem Anspruch 1, wobei das Gehäuse (2.3) eine Auskragung (2.31) umfasst, an dem das metallische Element (4) angeordnet ist und innerhalb der Auskragung (2.31) der Messwiderstand (3) angeordnet ist.

3. Kabel gemäß dem Anspruch 1 oder 2, wobei das metallische Element (4) das Gehäuse (2.3) durchdringt.

4. Kabel gemäß einem der vorhergehenden Ansprüche, wobei das metallische Element (4) derart ausgestaltet ist, dass dieses zur Befestigung des Steckers an einem weiteren Bauteil geeignet ist.

5. Kabel gemäß dem Anspruch 4, wobei das metallische Element (4) als eine Hülse oder eine Öse ausgestaltet ist.

6. Kabel gemäß einem der vorhergehenden Ansprüche, wobei das metallische Element (4) thermisch mit dem der Messwiderstand (3) über ein Blechteil (6) verbunden ist.

7. Kabel gemäß dem Anspruch 6, wobei das Blechteil (6) zwischen dem metallische Element (4) und dem Messwiderstand (3) angeordnet und elastisch vorgespannt ist.

8. Kabel gemäß dem Anspruch 6 oder 7, wobei das Blechteil (6) im Gehäuse (2.3) angeordnet ist.

9. Kabel gemäß einem der vorhergehenden Ansprüche, wobei der Messwiderstand (3) derart elektrisch mit der zumindest einen Ader (1.1) verbunden ist, dass der elektrische Strom, der durch den zumindest einen Kontakt (2.1) leitbar ist, vollständig durch den Messwiderstand (3) fließt.

10. Kabel gemäß dem Anspruch 9, wobei die zumindest eine Ader (1.1) getrennt ist, so dass die zumindest eine Ader (1.1) zwei Enden aufweist, wobei der Messwiderstand (3) an jeweils einem Ende der zumindest einen Ader (1.1) elektrisch kontaktiert ist.

11. Kabel gemäß einem der vorhergehenden Ansprüche, wobei das Gehäuse (2.3) durch ein Umspritzverfahren hergestellt ist, so dass der Messwiderstand (3) umspritzt ist.

12. Kabel gemäß einem der vorhergehenden Ansprüche, wobei das Kabel einen Kontaktträger (5) aufweist, an dem der zumindest eine Kontakt (2.1) befestigt ist, wobei der Kontaktträger (5) vom Gehäuse (2.3) umgeben ist.

13. Kabel gemäß dem Anspruch 11, wobei das Gehäuse (2.3) durch ein Umspritzverfahren hergestellt ist, so dass der Kontaktträger (5) umspritzt ist.

14. Kabel gemäß einem der vorhergehenden Ansprüche, wobei das Gehäuse (2.3) durch ein Umspritzverfahren hergestellt ist, wobei das metallische Element (4) umspritzt ist.

15. Kabel gemäß einem der vorhergehenden Ansprüche, wobei das Gehäuse (2.3) durch ein Umspritzverfahren hergestellt ist und die Leitung (1) einen Mantel (1.3) aufweist und der Mantel (1.3) über einen Teillänge hinweg umspritzt ist.

## Claims

1. Cable comprising
a line (1) which has at least one core (1.1), and
a plug connector (2) which has at least one contact (2.1) and a liquid-tight dielectric housing (2.3), wherein the at least one contact (2.1) is electrically connected to the at least one core (1.1), so that an electric current can be conducted from the at least one core (1.1) to the contact (2.1),
**characterized in that**
a temperature-sensitive measuring resistor (3) is arranged in the housing (2.3) and is electrically connected to the at least one core (1.1) in such a way that at least a portion of the electric current which can be conducted through the at least one contact (2.1) flows through the measuring resistor (3), and
a metal element (4) is arranged on the housing (2.3) and is thermally connected to the measuring resistor (3).

2. Cable according to Claim 1, wherein the housing (2.3) comprises a projection (2.31), the metal element (4) being arranged on the said housing and the measuring resistor (3) being arranged within the projection (2.31).

3. Cable according to Claim 1 or 2, wherein the metal element (4) passes through the housing (2.3).

4. Cable according to one of the preceding claims, wherein the metal element (4) is configured in such a way that it is suitable for fastening the plug to a further component.

5. Cable according to Claim 4, wherein the metal element (4) is configured as a sleeve or as an eye.

6. Cable according to one of the preceding claims, wherein the metal element (4) is thermally connected to the the measuring resistor (3) by means of a sheet-metal part (6).

7. Cable according to Claim 6, wherein the sheet-metal part (6) is arranged and elastically prestressed between the metal element (4) and the measuring resistor (3).

8. Cable according to Claim 6 or 7, wherein the sheet-metal part (6) is arranged in the housing (2.3).

9. Cable according to one of the preceding claims, wherein the measuring resistor (3) is electrically connected to the at least one core (1.1) in such a way that all of the electric current which can be conducted through the at least one contact (2.1) flows through the measuring resistor (3).

10. Cable according to Claim 9, wherein the at least one core (1.1) is separated, so that the at least one core (1.1) has two ends, wherein the measuring resistor (3) is electrically contacted at in each case one end of the at least one core (1.1).

11. Cable according to one of the preceding claims, wherein the housing (2.3) is produced by an overmoulding process, so that the measuring resistor (3) is overmoulded.

12. Cable according to one of the preceding claims, wherein the cable has a contact carrier (5) to which the at least one contact (2.1) is fastened, wherein the contact carrier (5) is surrounded by the housing (2.3).

13. Cable according to Claim 11, wherein the housing (2.3) is produced by an overmoulding process, so that the contact carrier (5) is overmoulded.

14. Cable according to one of the preceding claims, wherein the housing (2.3) is produced by an overmoulding process, wherein the metal element (4) is overmoulded.

15. Cable according to one of the preceding claims, wherein the housing (2.3) is produced by an overmoulding process, and the line (1) has a sheath (1.3) and the sheath (1.3) is overmoulded over part of its length.

## Revendications

1. Câble comprenant
une ligne (1) qui présente au moins un fil (1.1) et un connecteur enfichable (2) qui présente au moins un contact (2.1) et un boîtier diélectrique (2.3) étanche aux liquides, l'au moins un contact (2.1) étant connecté électriquement à l'au moins un fil (1.1) de telle sorte qu'un courant électrique puisse être conduit dans le contact (2.1) depuis l'au moins un fil (1.1),
**caractérisé en ce que**
dans le boîtier (2.3) est disposée une résistance de mesure (3) sensible à la température qui est connectée électriquement à l'au moins un fil (1.1) de telle sorte qu'au moins une partie du courant électrique qui peut être conduit à travers l'au moins un contact (2.1) passe à travers la résistance de mesure (3), et
un élément métallique (4) est disposé sur le boîtier (2.3), lequel est connecté thermiquement à la résistance de mesure (3).

2. Câble selon la revendication 1, dans lequel le boîtier (2.3) comprend une saillie (2.31), l'élément métallique (4) étant disposé sur le dit boîtier et la résistance de mesure (3) étant disposée à l'intérieur de la saillie (2.31).

3. Câble selon la revendication 1 ou 2, dans lequel l'élément métallique (4) traverse le boîtier (2.3).

4. Câble selon l'une quelconque des revendications précédentes, dans lequel l'élément métallique (4) est configuré de telle sorte que celui-ci soit apte à fixer le connecteur à un composant supplémentaire.

5. Câble selon la revendication 4, dans lequel l'élément métallique (4) est réalisé sous forme de douille ou d'oeillet.

6. Câble selon l'une quelconque des revendications précédentes, dans lequel l'élément métallique (4) est connecté thermiquement à la la résistance de mesure (3) par le biais d'une pièce en tôle (6).

7. Câble selon la revendication 6, dans lequel la pièce en tôle (6) est disposée entre l'élément métallique (4) et la résistance de mesure (3) et est précontrainte élastiquement.

8. Câble selon la revendication 6 ou 7, dans lequel la pièce en tôle (6) est disposée dans le boîtier (2.3).

9. Câble selon l'une quelconque des revendications précédentes, dans lequel la résistance de mesure (3) est connectée électriquement à l'au moins un fil (1.1) de telle sorte que le courant électrique qui peut être conduit à travers l'au moins un contact (2.1) passe complètement à travers la résistance de mesure (3).

10. Câble selon la revendication 9, dans lequel l'au moins un fil (1.1) est séparé de telle sorte que l'au moins un fil (1.1) présente deux extrémités, la résistance de mesure (3) étant mise en contact électriquement à chaque fois au niveau d'une extrémité de l'au moins un fil (1.1).

11. Câble selon l'une quelconque des revendications précédentes, dans lequel le boîtier (2.3) est fabriqué par un procédé de surmoulage de telle sorte que la résistance de mesure (3) soit surmoulée.

12. Câble selon l'une quelconque des revendications précédentes, dans lequel le câble présente un support de contact (5) au niveau duquel l'au moins un contact (2.1) est fixé, le support de contact (5) étant entouré par le boîtier (2.3).

13. Câble selon la revendication 11, dans lequel le boîtier (2.3) est fabriqué par un procédé de surmoulage de telle sorte que le support de contact (5) soit surmoulé.

14. Câble selon l'une quelconque des revendications précédentes, dans lequel le boîtier (2.3) est fabriqué par un procédé de surmoulage, l'élément métallique (4) étant surmoulé.

15. Câble selon l'une quelconque des revendications précédentes, dans lequel le boîtier (2.3) est fabriqué par un procédé de surmoulage et la ligne (1) présente une gaine (1.3), et la gaine (1.3) est surmoulée au-delà d'une longueur partielle.
